# EUROPÄISCHE PATENTANMELDUNG

(11) **EP 4 675 149 A2**
(43) Veröffentlichungstag der Anmeldung: **07.01.2026**
(21) Anmeldenummer: 25216941.2
(22) Anmeldetag: 06.12.2023
(51) Int. Cl.: F16N 29/02

(54) **VERFAHREN ZUR BESTIMMUNG UND/ODER ÜBERWACHUNG DES ZUSTANDES EINES SCHMIERSTOFFSPENDERS**

(30) Priorität: 09.03.2023 DE 102023105820
(62) Teilanmeldung aus: 23214483.2
(71) Anmelder: Perma-Tec GmbH & Co. KG, 97717 Euerdorf (DE)
(72) Erfinder: Graf, Paul, 97222 Rimpar (DE); Haupt, Thomas, 97705 Burkardroth (DE); Lenhart, Matthias, 97688 Bad Kissingen (DE)
(74) Vertreter: Andrejewski - Honke Patent- und Rechtsanwälte Partnerschaft mbB

(57) **Zusammenfassung**

Die Erfindung betrifft ein Verfahren zur Bestimmung und/oder Überwachung des Zustandes eines elektromechanisch betriebenen Schmierstoffspenders,
wobei der Schmierstoffspender einen mit Schmierstoff gefüllten Behälter und eine austauschbar an den Behälter angeschlossene, elektromechanische Antriebseinheit aufweist, mit welcher Schmierstoff aus dem Behälter zu einem Auslass förderbar ist,
wobei die Antriebseinheit oder ein oder mehrere in die Antriebseinheit und/oder in den Behälter integrierte Sensoren Messdaten für eine oder mehrere Messgrößen zur Verfügung stellen und
wobei auf Basis der Messdaten zumindest ein Zustand des Schmierstoffspenders bestimmt wird.

Das Verfahren ist **dadurch gekennzeichnet,**
dass die Messdaten oder daraus erzeugte Daten als Eingabedaten von einem mit Methoden des maschinellen Lernens trainierten Klassifizierungsalgorithmus verarbeitet werden, welcher auf Basis der Eingabedaten einen Zustand des Schmierstoffspenders klassifiziert. Dazu können die Messdaten z.B. mit einer vorgegebenen Abtastrate als Zeitreihen mit jeweils einer Vielzahl von Messwerten für eine oder mehrere Messgrößen zur Verfügung gestellt werden und diese Zeitreihen oder daraus erzeugte Daten als Eingabedaten (E) von dem Algorithmus verarbeitet werden.

## Beschreibung

Die Erfindung betrifft ein Verfahren zur Bestimmung und/oder Überwachung des Zustandes eines elektromechanisch betriebenen Schmierstoffspenders,
wobei der Schmierstoffspender einen mit Schmierstoff gefüllten Behälter (Vorratsbehälter, Schmierstoffbehälter) und eine austauschbar an den Behälter angeschlossene, elektromechanische Antriebseinheit aufweist, mit welcher Schmierstoff aus dem Behälter zu einem Auslass förderbar ist bzw. gefördert wird,
wobei die Antriebseinheit oder ein oder mehrere in die Antriebseinheit und/oder in den Behälter integrierte Sensoren Messdaten für eine oder mehrere Messgrößen zur Verfügung stellen und
wobei auf Basis der Messdaten zumindest ein Zustand des Schmierstoffspenders bestimmt wird.

Der Schmierstoffspender wird beispielsweise zur automatisierten Schmierung von Maschinen- oder Anlagenteilen, wie z.B. Lagern, Linearführungen, Ketten oder dergleichen eingesetzt. Der Schmierstoffspender ist beispielsweise mit einer Schmierstelle (z.B. eines Lagers) verbunden und kann Schmierstoff in Abhängigkeit von der Laufzeit einer Maschine oder in vorgegebenen Intervallen abgeben. Der Behälter ist als Vorratsbehälter mit dem Schmierstoff gefüllt. Er wird auch als Schmierstoffbehälter, Kartusche oder "LC-Einheit" (Liquid Container) bezeichnet. Als Schmierstoffe kommen z.B. Fette oder Öle zum Einsatz. Der Behälter lässt sich z.B. lösbar und austauschbar zu einer modularen Baueinheit mit der Antriebseinheit verbinden, z.B. durch eine Schraubverbindung, Steckverbindung, Rastverbindung, Bajonettverbindung oder dergleichen. Dadurch lässt sich die Antriebseinheit mehrfach verwenden und der Behälter nach Entleerung des Schmierstoffs austauschen bzw. durch einen neuen, gefüllten Behälter ersetzen. Es werden aber auch Ausführungen erfasst, bei dem der Behälter und die Antriebseinheit eine feste Baueinheit bilden.

Die Antriebseinheit, die auch als Antriebskopf bezeichnet wird, kann einen elektromotorischen Antrieb, eine oder mehrere Batterien als Energieversorgung und gegebenenfalls eine Steuereinrichtung für die Steuerung des Antriebes zur Abgabe des Schmierstoffes umfassen, wobei die genannten Komponenten in der Regel in einem Gehäuse der Antriebseinheit enthalten sind.

In einer möglichen Ausführungsform ist der Schmierstoffbehälter selbst mit einer Auslassöffnung als Auslass für den Schmierstoff versehen und der Schmierstoff wird aus dem Behälter mit einem an einer Spindel geführten Kolben herausgedrückt, wobei der Kolben in dem Schmierstoffbehälter, d.h. in der LC-Einheit angeordnet und in dem Behälter zum Herausdrücken geführt wird, und zwar mithilfe einer Spindel, die ebenfalls Bestandteil der LC-Einheit ist. Die Antriebseinheit wird als Antriebskopf mit einer solchen LC-Einheit verbunden und dabei die Abtriebswelle des Motors mit der Spindel verbunden. Die Steuerung erfolgt über eine in der Antriebseinheit angeordnete Steuereinrichtung, die z.B. eine elektronische Platine aufweist, die gegebenenfalls mit einem Betätigungselement, z.B. einem Taster, und einer oder mehreren optischen Anzeigen, z.B. einem Bildschirm oder einer LCD-Anzeige und/oder einer oder mehreren Leuchtdioden, LEDs versehen oder verbunden ist. Eine solche Ausführungsform ist z.B. aus der DE 10 2012 100 035 A1 bekannt. Über die Betätigungseinrichtung lassen sich die Einstellungen der Schmierstoffabgabe eingeben, z.B. Laufzeiten, Spendeintervalle usw.

In einer alternativen Ausführungsform ist nicht der Schmierstoffbehälter (d.h. die LC-Einheit), sondern die Antriebseinheit selbst als sogenannte Fördereinheit mit einem Auslass ausgerüstet bzw. verbunden, d.h. die Fördereinheit fördert nach Art einer Pumpe Schmierstoff aus dem Vorratsbehälter zu dem Auslass. Auch in diesem Fall ist die Antriebseinheit bzw. Pumpe mit einer Steuereinrichtung ausgerüstet, über die verschiedene Parameter zum Betrieb auswählbar sind, z.B. Spendezeit, Spendeintervalle oder dergleichen. Eine solche Ausführungsform ist z.B. aus der DE 102 34 881 A1 und der DE 10 2019 106 692 A1 bekannt.

Stets besteht die Möglichkeit, dass der Schmierstoffspender, z.B. deren Antriebseinheit mit einer Kommunikationseinrichtung ausgerüstet ist, die eine drahtgebundene oder vorzugsweise drahtlose Kommunikation des Schmierstoffspenders mit einem externen Gerät, z.B. einem Endgerät (Smartphone, Tablet, Laptop oder Computer) erlaubt. So besteht die Möglichkeit, Einstellungen an dem Schmierstoffspender mithilfe eines externen Gerätes vorzunehmen und/oder Informationen auszulesen oder an ein externes Gerät zu übertragen.

Mit dem Schmierstoffspender lässt sich z.B. in industriellen Anlagen eine regelmäßige und/oder gleichmäßige Schmierung der jeweiligen Anlagenkomponenten realisieren, sodass sowohl Mangelschmierungen als auch Überschmierungen verhindert werden. Damit lassen sich die Standzeiten der Maschinen und z.B. die Lebensdauer von Lagern verlängern und Stillstandzeiten vermeiden bzw. reduzieren.

Der Schmierstoffspender kann als Einzelpunktschmiereinrichtung oder als Mehrpunktschmiereinrichtung eingesetzt werden. Bei einem Einzelpunkt-Schmierstoffspender ist der Schmierstoffspender mit dem Auslass unmittelbar oder unter Zwischenschaltung einer Schlauchleitung mit der Schmierstelle verbunden. Bei einem Mehrpunktschmierstoffspender können mehrere Auslassöffnungen vorhanden sein oder an eine Auslassöffnung des Schmierstoffspenders ist eine separate Verteilereinrichtung angeschlossen, über die mit einem einzigen Schmierstoffspender eine Vielzahl von Schmierstellen an verschiedenen Orten über Schlauchleitungen versorgt werden.

Da die einwandfreie Funktion eines Schmierstoffspenders für den Betrieb und den Zustand der zu schmierenden Anlage oder Einrichtung von entscheidender Bedeutung ist, besteht grundsätzlich das Bedürfnis, den Zustand eines Schmierstoffspenders zu bestimmen und zu überwachen. Dazu können verschiedene Parameter des Schmierstoffspenders ermittelt werden, z.B. mithilfe von Sensoren.

In der US 2021/0350696 A1 wird eine Vorrichtung zur Abgabe von Schmierstoff beschrieben, die mit einer Kommunikationseinrichtung versehen ist, sodass Zustandsinformationen des Schmierstoffspenders an ein externes Gerät, z.B. ein Smartphone gesendet bzw. von einem externen Gerät abgefragt werden können. Solche Statusinformationen können die verbliebene Batterieleistung, eine Überlastwarnung des Motors oder auch eine Information über den in einem Schmierstoffbehälter verbleibenden Schmierstoff betreffen.

Problematisch ist bei der Bestimmung oder Überwachung des Zustandes eines Schmierstoffspenders, dass sich die für die Überwachung interessanten Zustände nicht ohne weiteres eindeutig aus einzelnen Messwerten wie z.B. einem Temperaturwert oder einem Druckwert oder auch Kennwerten des Antriebes herleiten lassen. - Hier setzt die Erfindung ein.

Der Erfindung liegt die Aufgabe zugrunde, ein Verfahren anzugeben, mit dem sich der Zustand eines elektromechanisch betriebenen Schmierstoffspenders in optimierter Weise zuverlässig und einfach überwachen lässt. Außerdem soll ein Schmierstoffspender angegeben werden, der diese optimierte Art der Bestimmung oder Überwachung des Zustandes ermöglicht bzw. dafür eingerichtet ist.

Zur Lösung dieser Aufgabe lehrt die Erfindung bei einem gattungsgemäßen Verfahren der eingangs beschriebenen Art, dass die Messdaten oder daraus erzeugte Daten als Eingabedaten von einem mit Methoden des maschinellen Lernens trainierten Algorithmus verarbeitet werden, welcher auf Basis der Eingabedaten einen Zustand des Schmierstoffspenders klassifiziert. Dazu können die Messdaten z.B. mit einer vorgegebenen Abtastrate als Zeitreihen mit jeweils einer Vielzahl von Messwerten für eine oder mehrere (physikalische) Messgrößen zur Verfügung gestellt werden und die Zeitreihen oder daraus erzeugte Daten als Eingabedaten von dem mit Methoden des maschinellen Lernens trainierten Algorithmus verarbeitet werden, welcher auf Basis der Eingabedaten einen Zustand des Schmierstoffspenders klassifiziert. Bevorzugt werden als Zeitreihen multivariate Zeitreihen zur Verfügung gestellt, die für mehrere Messgrößen jeweils eine Vielzahl von Messwerten enthalten.

Bei den Messdaten kann es sich z.B. um Daten handeln, die mittels Sensoren gemessen werden. Alternativ kann es sich dabei aber auch um Daten handeln, die ohne den Einsatz separater Sensoren von dem Schmierstoffspender bzw. innerhalb des Schmierstoffspenders, z.B. unmittelbar von dem Antrieb, zur Verfügung gestellt werden. In der Regel handelt es sich bei den Messdaten um solche Daten des Schmierstoffspenders, die sich während des Betriebes (zeitlich) verändern und insoweit charakteristisch für den Zustand des Schmierstoffspenders sind und die Basis für die Verarbeitung mithilfe des Algorithmus bilden. Optional können in die Verarbeitung mit Hilfe des Algorithmus zusätzlich zu den Messdaten aber auch eine oder mehrere charakteristische Größen des Schmierstoffspenders als Zusatzinformation einfließen und bei der Klassifizierung des Zustandes berücksichtigt werden, und zwar in der Regel zusätzlich zu den Messdaten, die für eine oder mehrere (variierende) Messgrößen berücksichtigt werden.

Als Messgrößen werden z.B. eine Temperatur, ein Druck, ein Strom, eine Spannung und/oder eine Drehgeschwindigkeit zur Verfügung gestellt, z.B. mit einem oder mehreren Sensoren gemessen oder unmittelbar von dem Antrieb oder einer Steuerung zur Verfügung gestellt.

Die Erfindung geht dabei von der Erkenntnis aus, dass die zuverlässige Bestimmung oder Überwachung des Zustandes eines Schmierstoffspenders von großer praktischer Bedeutung ist, da der einwandfreie Betrieb des Schmierstoffspenders auch wesentlichen Einfluss auf einen einwandfreien Betrieb der mit dem Schmierstoffspender zu schmierenden Anlage oder Maschine hat bzw. haben kann. Dabei hat die Erfindung erkannt, dass die einen Schmierstoffspender charakterisierenden Zustände, z.B. ein Normalzustand oder auch der Zustand eines leeren Behälters häufig nur schwer über die Messung und Auswertung einzelner Parameter festgestellt werden können, da nicht immer ein unmittelbarer Zusammenhang zwischen dem interessierenden Zustand und der physikalischen Messgröße (z.B. Temperatur, Druck, Strom oder Spannung) besteht. Es lässt sich daher nicht immer zuverlässig ein bestimmter Fehlerzustand feststellen, wenn ein bestimmter Parameter einen vorgegebenen Grenzwert überschreitet oder unterschreitet. Ausgehend von diesen Erkenntnissen wird die Bestimmung oder Überwachung des Zustandes eines Schmierstoffspenders wesentlich verbessert, indem die Zustandsbestimmung nicht allein auf der Überwachung von Messwerten bzw. Schwellwerten basiert, sondern die aufgenommenen oder zur Verfügung gestellten Daten bzw. Messwerte oder Messdaten werden mit einem zuvor trainierten Klassifizierungsalgorithmus verarbeitet und ausgewertet, d.h. mit einem Algorithmus, der zuvor mit Methoden des maschinellen Lernens und folglich Methoden des "machine learnings" trainiert wurde. Erfindungsgemäß gelingt folglich die Zustandsklassifizierung auf Basis von messtechnisch aufgenommenen Sensordaten oder von der Steuerung zur Verfügung gestellten Daten mittels eines "machine learning" Algorithmus.

Dabei greift die Erfindung auf grundsätzlich bekannte Erkenntnisse und Methoden des "machine learning" bzw. der Zustandsklassifizierung mithilfe von Algorithmen zurück. Das maschinelle Lernen ist ein Bereich der künstlichen Intelligenz (kl). Die Systeme erkennen Zusammenhänge und Abhängigkeiten aus einem Datensatz um auf diese Weise anschließend neue Daten zu bewerten. Dabei werden innerhalb des machine learning verschiedene Arten unterschieden, nämlich das überwachte Lernen (Supervised Learning), das unüberwachte Lernen (Unsupervised Learning), das teilüberwachte Lernen (Semi Supervised Learning) und das verstärkende Lernen (Reinforcement Learning). Alternativ kommt als weiterer Bereich des maschinellen Lernens das Deep Learning infrage. Grundsätzlich können im Rahmen der Erfindung sämtliche der genannten Methoden eingesetzt werden. Bevorzugt erfolgt das Anlernen des Systems mithilfe des überwachten Lernens. Solche Modelle des überwachten Lernens erhalten einen Trainingsdatensatz, welcher die Zielvariable (Ausgabe) kennt. Aus diesen Daten lernt der Algorithmus Zusammenhänge und kann neue Daten klassifizieren oder Vorhersagen. Bei einer Zielvariablen handelt es sich dann im Rahmen der Erfindung um den zu klassifizierenden Zustand. Grundsätzlich umfasst die Erfindung aber auch das Anlernen bzw. Trainieren des Algorithmus mit anderen Methoden, z.B. durch das unüberwachte Lernen, das teilüberwachte Lernen und/oder das verstärkende Lernen.

Auch im Zusammenhang mit den verwendeten Algorithmen kann die Erfindung auf bekannte Erkenntnisse zurückgreifen. So kann - insbesondere für das überwachte Lernen - der Algorithmus z.B. vom Typ "Random Forest Klassifikator" oder vom Typ "Support Vektor Machine" oder vom Typ "Naive Bayes Klassifikator" oder vom Typ "k-Nearest Neighbor Klassifikator" oder vom Typ "Long Short Term Memory (LSTM)" sein. Als bevorzugte Ausführungsform kann im Rahmen der Erfindung der Algorithmus vom Typ" Long Short Term Memory (LSTM)" zum Einsatz kommen. Long Short Term Memory-Algorithmen sind eine Art der rekurrenten Netze, welche wiederum von den neuronalen Netzen abstammen. In neuronalen Netzen sind mehrere künstliche Neuronen miteinander gekoppelt. Rekurrente neuronale Netze haben gegenüber einem neuronalen Netz den Vorteil, dass die künstlichen Neuronen innerhalb einer Schicht oder zu Neuronen aus vergangenen Schichten verbunden sind. Daraus entsteht die Fähigkeit, Zeitreihendaten effektiver zu verarbeiten. Das "Long Short Term Memory" ist eine Variante des rekurrenten neuronalen Netzes und es enthält eine Kombination aus Lang- und Kurzzeitgedächtnis. Um markante Informationen über Zeitreihen zu sichern, überträgt ein LSTM neben dem Zustandswert auch den Zellzustand. Dieser fungiert als Langzeitgedächtnis und benötigt daher Gewichtskoeffizienten, die darüber entscheiden, welche Informationen vergangener Zeitschritte gemerkt oder vergessen werden. Ein solcher LSTM-Algorithmus kommt im Rahmen der Erfindung besonders bevorzugt zum Einsatz. Grundsätzlich erfasst die Erfindung aber auch Algorithmen (z.B. Klassifizierungsalgorithmen) anderer Art. Der Algorithmus dient im Rahmen der Erfindung der Klassifizierung eines Zustandes des Schmierstoffspenders, sodass der Algorithmus auch als Klassifizierungsalgorithmus bezeichnet werden kann. Die Klassifizierung kann unmittelbar mithilfe des Klassifizierungsalgorithmus erfolgen, d.h. der Klassifizierungsalgorithmus gibt als Ausgabe den ermittelten Zustand aus. Die Erfindung umfasst aber auch Ausführungsformen, bei denen die Klassifizierung mittelbar über den Algorithmus erfolgt, indem der Algorithmus z.B. als Ausgabe zunächst eine Prognose erzeugt, z.B. eine Prognose für eine bestimmte Messgröße vorhersagt. Abgeleitet aus dieser Erkenntnis kann dann in einem nächsten Schritt der Zustand ebenfalls bestimmt werden, sodass auch auf diese Weise eine Klassifizierung des Zustandes des Schmierstoffspenders möglich ist.

Basis für die erfindungsgemäße Zustandsbestimmung mithilfe des Algorithmus sind insbesondere die als Rohdaten aufgenommenen oder zur Verfügung gestellten Messdaten, die in herkömmlicher Weise (z.B. mit Sensoren) gemessen oder (z.B. unmittelbar vom Antrieb) zur Verfügung gestellt werden können. Bei diesen Rohdaten handelt es sich z.B. um Temperaturwerte, Druckwerte, Stromwerte, Spannungswerte und/oder Geschwindigkeitswerte bzw. Drehgeschwindigkeiten.

Optional kann der Algorithmus zusätzlich zu den genannten Messdaten eine oder mehrere charakteristischen Größen des Schmierstoffspenders verarbeiten, die sich für einen konkreten, einzelnen Schmierstoffspender während des Betriebes nicht verändern, z.B. die Behältergröße und/oder die Art des Schmierstoffs.

Die Rohdaten können vor der Analyse durch den Algorithmus zunächst in einer Vorverarbeitungsstufe ("Preprocess") vorverarbeitet werden. Dabei kann es z.B. zweckmäßig sein, die Messdaten/Rohdaten, z.B. die als Zeitreihen aufgenommenen Rohdaten in einer (z.B. einer ersten) Vorverarbeitungsstufe zu filtern, zu skalieren, zu normalisieren und/oder zu transformieren. Es handelt sich in dieser ersten Vorverarbeitungsstufe um allgemeine Vorverarbeitungsschritte, mit denen insbesondere die Werte der Zeitreihen bzw. deren Absolutwerte verändert werden können, z.B. normalisiert werden können. Diese Verarbeitung wird auch als "Data Cleaning" bezeichnet. Alternativ oder ergänzend kann in dieser ersten Vorverarbeitungsstufe auch eine Transformation der Messwerte in einen Frequenzbereich, z.B. durch eine Fouriertransformation, erfolgen. Diese erste Vorverarbeitungsstufe betrifft folglich die Veränderung der aufgenommenen Messwerte selbst, ohne dass dabei in der Regel die Länge der Zeitreihen/Messreihen verändert wird.

Alternativ oder zusätzlich werden in einer (z.B. zweiten) Vorverarbeitungsstufe die Rohdaten oder alternativ auch die in der ersten Vorverarbeitungsstufe vorverarbeiteten Daten auf eine einheitliche Vektorgröße für einen Eingabevektor des Algorithmus normiert. Denn für eine einwandfreie Übergabe der Daten an den Algorithmus ist es erforderlich bzw. vorteilhaft, wenn die Eingabedaten einen Eingabevektor mit einheitlicher Vektorgröße bilden. Werden die Daten z.B. als eine Vielzahl von aufgenommenen Zeitreihen als Eingabedaten an den Algorithmus übergeben, so müssen die Zeitreihen, die z.B. durch unterschiedlich lange Messzeiträume eine unterschiedliche Länge, d. h. eine unterschiedliche Anzahl von Messwerten umfassen, auf eine einheitliche Länge normiert werden. Eine solche Normierung auf einen einheitlichen Eingabevektor kann in einer ersten Ausführungsform durch eine Längenveränderung einer oder mehrerer Zeitreihen realisiert werden. Dieses lässt sich, wenn z.B. eine Zeitreihe zu lang ist, im Sinne einer Reduktion durch eine Fensterung umsetzen. Im Falle einer zu kurzen Zeitreihe kann eine Erweiterung um bestimmte Werte erfolgen, um eine einheitliche Länge zu erhalten. Alternativ kann aber auch die Abtastrate verändert werden. Dazu können interpolierte Datenpunkte hinzugefügt werden, um eine Messreihe zu erweitern. Um eine Messreihe zu verkürzen, könnten Messpunkte ausgeblendet werden. Stets steht die Vereinheitlichung der Länge der Messreihe und damit die Vereinheitlichung der Vektorgröße für den Eingabevektor im Vordergrund.

Alternativ oder ergänzend zu der Längenveränderung der Zeitreihen kann die Normierung des Eingabevektors durch eine Datenreduktion erfolgen bzw. mit einer Datenreduktion verbunden werden.

Eine Datenreduktion ist insbesondere dann sinnvoll, wenn die Datensätze, z.B. die (multivariaten) Zeitreihen, aus großen Datenmengen bestehen bzw. große Datenmengen bilden. Dieses gelingt vorzugsweise durch eine Kennwert-Extraktion, die auch als "Feature Extraction" bezeichnet wird und mit der sich markante Punkte aus den Daten extrahieren lassen und dabei zugleich alle Informationen erhalten bleiben. Dieses erfolgt z.B. dadurch, dass aus den Daten, z.B. Zeitreihen, im Rahmen der "Feature Extraction" jeweils mehrere statistische Kennwerte ("Features") berechnet werden, welche die Messdaten, z.B. jeweilige Zeitreihe, charakterisieren und z.B. als Eingabevektor für den Klassifizierungsalgorithmus zur Verfügung gestellt werden. Als statistische Kennwerte kommen z.B. einer, mehrere oder sämtliche der folgenden Kennwerte einer Zeitreihe zum Einsatz:
Summe der Messwerte, Median, Mittelwert, Länge, Standardabweichung, Varianz, quadratisches Mittel (RMS), Maximum, Minimum.

Ein sogenannter Feature-Vektor setzt sich folglich aus mehreren oder sämtlichen der genannten statistischen Kennwerte zusammen und bildet einen Eingabevektor für den Algorithmus bzw. Klassifizierungsalgorithmus. Alternativ oder ergänzend können auch andere (statistische) Kennwerte verwendet werden.

Alternativ zu der beschriebenen Datenreduktion durch Feature Extraction kommt eine Normierung z.B. durch die beschriebene Längenreduktion infrage.

Optional ist vorgesehen, die Eingangsdaten aus multivariaten Zeitreihen zu bilden, die Daten für verschiedene Messgrößen (Features) enthalten, zum Beispiel Temperatur, Druck, Strom, Spannung und/oder Drehgeschwindigkeit. Diese Messgrößen können als "Features" bezeichnet werden. Die zu bestimmenden Zustände werden auch als "Label" bezeichnet. Versuche und Analysen haben ergeben, dass sich häufig mit nur wenigen Features bzw. Messgrößen (z.B. Stromstärke und Rotationsgeschwindigkeit), eine sehr hohe Genauigkeit erreichen lässt und das die Analyse von mehr als zwei Messgrößen/Features nicht zwingend zu einer höheren Genauigkeit führt. Dieses hängt auch von der Wahl des jeweiligen Klassifizierungsalgorithmus ab.

Jedenfalls erfolgt erfindungsgemäß das Trainieren des Systems mithilfe von Trainingsdaten. Die Erfindung umfasst folglich nicht nur das beschriebene Verfahren zur Bestimmung und oder Überwachung des Zustandes eines Schmierstoffspenders, sondern auch ein Verfahren zum Anlernen eines solchen Schmierstoffspenders. Dieses Anlernverfahren ist dadurch gekennzeichnet, dass zumindest Trainingsdaten zur Verfügung gestellt werden und dass der Algorithmus mit diesen Trainingsdaten trainiert wird. Das Anlernverfahren wird folglich auch selbstständig unter Schutz gestellt. Insbesondere dann, wenn mit der Methode des überwachten Lernens gearbeitet wird, ist das Anlernverfahren dadurch gekennzeichnet, dass sowohl Trainingsdaten als auch den Trainingsdaten zugeordnete, klassifizierte Zustände zur Verfügung gestellt werden und dass der Algorithmus mit diesen Trainingsdaten und den zugeordneten Zuständen trainiert wird.

Außerdem betrifft die Erfindung einen Schmierstoffspender der beschriebenen Art, der einerseits einen Behälter bzw. eine Kartusche und andererseits eine Antriebseinheit aufweist, wobei diese beiden Komponenten entweder austauschbar miteinander verbunden werden oder auch eine einheitliche, unlösbare Baueinheit bilden können. Bestandteil der Antriebseinheit ist in der Regel eine Steuereinheit, die einen Speicher aufweisen kann.

Für die praktische Umsetzung gibt es verschiedene Möglichkeiten.

In der ersten Ausführungsform arbeitet der Schmierstoffspender autark, d.h. der (trainierte) Algorithmus ist in einem Speicher im Schmierstoffspender, z.B. in der Antriebseinheit gespeichert. Die gesamte Auswertung und Analyse erfolgt folglich innerhalb des Schmierstoffspenders, der autark arbeitet und den Zustand in der beschriebenen Weise bestimmt und/oder überwacht. Das setzt voraus, dass der Schmierstoffspender mit einem Speicher ausreichender Größe ausgerüstet ist, um den Algorithmus und die aufgenommenen Daten zu speichern.

In einer zweiten Ausführungsform wird die Klassifizierung und gegebenenfalls auch die vorgelagerte Datenverarbeitung auf einen externen Rechner, z.B. einen Cloud-Server ausgelagert. Das setzt voraus, dass der Schmierstoffspender mit dem Rechner kommunizieren kann, d.h. einerseits Daten von dem Schmierstoffspender an den Rechner übermitteln und andererseits nach entsprechender Auswertung Zustandsinformationen von dem Server empfangen kann. Dazu ist der Schmierstoffspender bevorzugt mit einer Kommunikationseinrichtung für eine drahtlose oder drahtgebundene Kommunikation des Schmierstoffspenders mit dem externen Rechner ausgerüstet. Dabei kann es sich um eine Kommunikationseinrichtung handeln, die für die Kommunikation mittels Funk, z.B. per WLAN, Bluetooth oder dergleichen eingerichtet ist. Über eine Funkverbindung kann der Schmierstoffspender z.B. mit einem Gateway kommunizieren, über welches die Übertragung an den Rechner, z.B. den Cloud-Server erfolgt. Die Sensordaten werden folglich von dem Schmierstoffspender aufgenommen und z.B. über ein Gateway an einen Cloud-Server gesendet. Die Übertragung kann beispielsweise in einem oder mehreren Datenframes, welche der Schmierstoffspender generiert, erfolgen. Der Server führt anschließend die gegebenenfalls erforderlichen Vorverarbeitungen und schließlich die Zustandsklassifizierung mithilfe des Algorithmus durch. Anschließend wird der in der erfindungsgemäßen Weise bestimmte Zustand optional an den Schmierstoffspender oder das Schmierstoffsystem übertragen, sodass optional eine entsprechende Reaktion erfolgen kann. Bei dieser Reaktion kann es sich z.B. um die Veränderung der Pausenzeiten oder dergleichen handeln. Diese Ausführungsform hat den Vorteil, dass die rechen- und speicherintensiven Auswertungen in den Server verlagert werden können. Es ist jedoch eine Verbindung des Schmiersystems zu einem Gateway und/oder einem Server erforderlich.

Im Folgenden wird die Erfindung anhand von Zeichnungen näher erläutert, die lediglich Ausführungsbeispiele darstellen. Es zeigen
- Fig. 1: einen Schmierstoffspender in einem Vertikalschnitt,
- Fig. 2: ein Verfahrensschema zur Überwachung des Zustandes eines Schmierstoffspenders,
- Fig. 3: eine erfindungsgemäße Einrichtung mit einem Schmierstoffspender und einem externen Rechner.

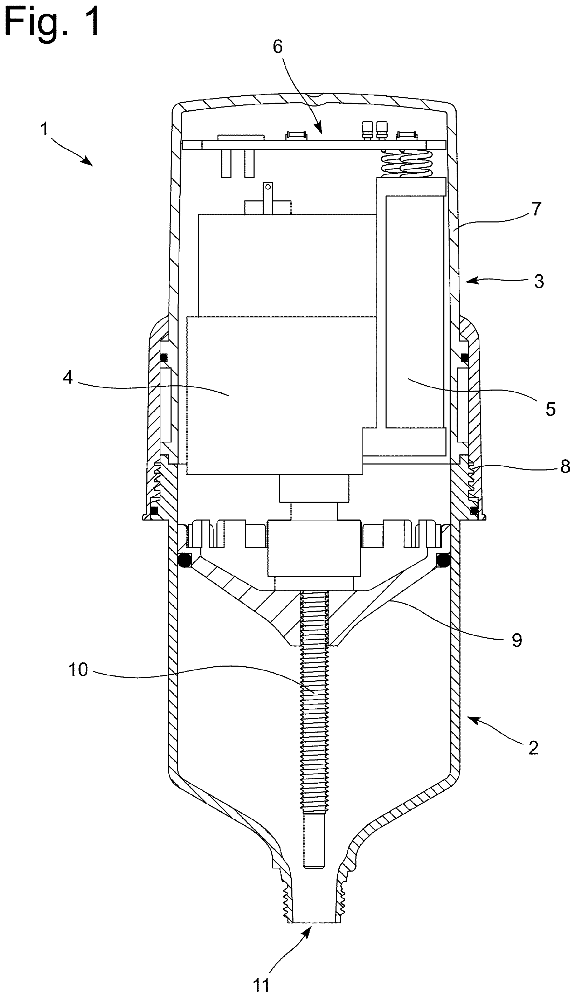

In Fig. 1 ist ein Schmierstoffspender 1 in grundsätzlich bekanntem Aufbau dargestellt. Der Schmierstoffspender weist einen mit Schmierstoff gefüllten Behälter 2 auf, der auch als Kartusche oder LC-Einheit bezeichnet wird. Ferner weist der Schmierstoffspender 1 eine elektromechanische Antriebseinheit 3 auf, die mit der Kartusche lösbar verbunden ist. Die Antriebseinheit 3, die auch als Antriebskopf bezeichnet wird, weist einen elektromotorischen Antrieb 4 und eine oder mehrere Batterien 5 als Energieversorgung sowie eine Steuereinrichtung 6 für die Steuerung des Antriebes zur Abgabe des Schmierstoffes auf. Bei der Steuereinrichtung 6 kann es sich um eine mit geeigneten elektromotorischen Komponenten bestückte Platine handeln. Diese Komponenten sind in einem Gehäuse 7 der Antriebseinheit 3 angeordnet, wobei dieses Gehäuse 7 mit der Kartusche 2 verbunden wird, z.B. durch eine Schraubverbindung 8, Steckverbindung, Rastverbindung oder Bajonettverbindung. In der Kartusche 2 ist ein Kolben 9 an einer Spindel 10 geführt, sodass durch Drehung der Spindel 10 der Kolben 9 bewegt und damit der Schmierstoff aus der Auslassöffnung 11 der Kartusche herausgedrückt wird. Im Zuge des Verbindens der Antriebseinheit 3 mit der LC-Einheit 2 wird die Abtriebswelle des Motors 4 mit der Spindel 10 verbunden.

Der Schmierstoffspender 1, z.B. die Antriebseinheit 3, kann mit einem oder mehreren (nicht dargestellten) Sensoren ausgerüstet sein, mit denen Messdaten für eine oder mehrere (physikalische) Messgrößen zur Verfügung gestellt werden. Die Messdaten können auch unmittelbar ohne separate Sensoren über die Antriebseinheit 3, z.B. über den Motor 4 oder die Steuerung 6 zur Verfügung gestellt werden. Als Messgrößen kommen z.B. Motorstrom, Motorspannung, Temperatur (bzw. ein Spannungswert für die Temperaturmessung) und/oder ein Druck und/oder die Drehgeschwindigkeit der Spindel bzw. des Motors infrage. Optional können zusätzlich zu den sich z.B. während des Betriebes verändernden Messdaten eine oder mehrere (für den Schmierstoffspender konstante) charakteristische Größen zur Verfügung gestellt werden, z.B. die Behältergröße und/oder die Art des Schmierstoffs.

Bereits im Stand der Technik konnte eine Überwachung der genannten Messgrößen erfolgen, um gegebenenfalls einen Zustand des Schmierstoffspenders festzustellen, z.B. wenn ein Stromwert oder ein Spannungswert oder ein Temperaturwert einen bestimmten Grenzwert überschreitet oder unterschreitet.

Im Rahmen der Erfindung erfolgt jedoch keine unmittelbare Auswertung einzelner Messgrößen um z.B. das Überschreiten oder Unterschreiten eines Grenzwertes festzustellen. Denn erfindungsgemäß erfolgt eine Zustandsklassifizierung des Schmierstoffspenders anhand multivariater Daten, z.B. Sensordaten mithilfe des maschinellen Lernens bzw. mithilfe eines Klassifizierungsalgorithmus, der mit Methoden des maschinellen Lernens trainiert ist.

Dazu werden die Messdaten z.B. mit einer vorgegebenen Abtastrate als Zeitreihen mit jeweils einer Vielzahl von Messwerten für eine oder mehrere Messgrößen zur Verfügung gestellt und die Zeitreihen oder daraus erzeugte Daten (sowie ggf. charakteristische Größen) als Eingabedaten von einem Algorithmus verarbeitet, der auf Basis der Eingabedaten einen Zustand des Schmierstoffspenders klassifiziert. Damit lassen sich erfindungsgemäß verschiedene Zustände bestimmen, z.B. ein Normalzustand, der Zustand "fehlender Behälter", der Zustand "leerer Behälter", ein Zustand "Überstrom/Druckanstieg", ein Zustand "Überstrom/Blockade" und/oder ein Zustand "mechanischer Schaden". Bei einem mechanischen Schaden kann es sich z.B. um einen mechanischen Bruch der Spindel oder einen ähnlichen Schaden handeln.

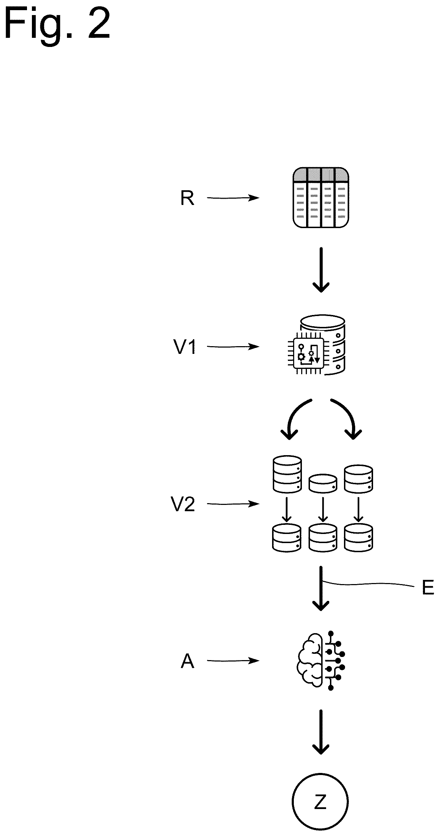

Dazu wird der Algorithmus zunächst mit Trainingsdaten und - sofern mit der Methode des überwachten Lernens gearbeitet wird - mit zugeordneten Zuständen trainiert. Im Betrieb kann dann mithilfe dieses trainierten Algorithmus eine Zustandsüberwachung in der beschriebenen Weise erfolgen. Dazu wird auf das Verfahrensdiagramm gemäß Fig. 2 verwiesen.

Zunächst werden die Rohdaten R als z.B. Zeitreihen aufgenommen und gespeichert. Anschließend können die Rohdaten R optional in einer ersten Vorverarbeitungsstufe V1 vorverarbeitet werden. Diese Vorverarbeitung in der ersten Vorverarbeitungsstufe wird auch als "Data cleaning" der Rohdaten bezeichnet. Die Rohdaten lassen sich z.B. skalieren, normalisieren, filtern und/oder transformieren. In der Regel handelt es sich um Veränderungen der Messwerte selbst, z.B. der Absolutwerte der Messwerte innerhalb der Zeitreihen. In der (ersten) Vorverarbeitungsstufe kann auch eine Reduzierung/Streichung einzelner Messgrößen/Messreihen, wie z.B. Spannung oder Druck, erfolgen.

Alternativ oder anschließend kann in bevorzugter Ausführungsform eine Bearbeitung der gegebenenfalls bereits in der ersten Stufe V1 vorbereiteten Messdaten in einer (zweiten) Vorverarbeitungsstufe V2 erfolgen. Diese Vorverarbeitungsstufe V2 dient der Erzeugung von Eingabevektoren für den Algorithmus mit einheitlicher Vektorgröße und folglich eine Normierung der Daten, z.B. Zeitreihen, auf eine einheitliche Vektorgröße. So ist in der Fig. 2 schematisch angedeutet, dass mehrere Zeitreihen eine unterschiedliche Länge aufweisen können, wenn z.B. unterschiedlich lange Spendezeiträume aufgenommen wurden. In dieser Vorverarbeitungsstufe V2 werden die Zeitreihen z.B. auf eine einheitliche Länge normiert und auf diese Weise werden Eingabevektoren mit einheitlicher Vektorgröße erzeugt. Dieses gelingt z.B. durch Reduktion oder Erweiterung der Länge einer Messreihe oder auch durch Veränderung der Abtastrate. In einer besonders bevorzugten Ausführungsform erfolgt im Zuge dieser zweiten Vorverarbeitungsstufe eine Datenreduktion, z.B. durch eine Kennwert-Extraktion. Es wird nicht die Länge z.B. einzelner Zeitreihen verändert bzw. normiert, sondern aus den Daten, z.B. Zeitreihen, werden jeweils mehrere statistische Kennwerte berechnet werden, welche die jeweilige Zeitreihe charakterisieren und anschließend als Eingabevektor für den Algorithmus A zur Verfügung stehen. Mithilfe dieser Kennwert-Extraktion lassen sich folglich markante Punkte aus den Daten extrahieren und dennoch bleiben alle relevanten Informationen erhalten. Bei den Kennwerten kann es sich um einen oder mehrere der folgenden Kennwerte handeln: Summe der Messwerte, Median, Mittelwert, Länge, Standardabweichung, Varianz, quadratisches Mittel (RMS), Maximum, Minimum. Die auf diese Weise reduzierten Messdaten werden als Eingabedaten E für den Algorithmus A verwendet, der zuvor in der beschriebenen Weise trainiert wurde, sodass während des Betriebes die Klassifizierung von Zuständen Z erfolgt, d.h. ein Zustand des Schmierstoffspenders festgestellt wird, z.B. ein Normalzustand oder alternativ auch ein Fehlerzustand wie z.B. der Zustand "leerer Behälter". Stets ist es vorteilhaft, dass immer exakt die gleichen Kennwerte und insbesondere die gleiche Zahl von Kennwerten erzeugt und verarbeitet werden, so dass diese Kennwerte jeweils einen Eingabevektor mit einheitlicher Vektorgröße für den Algorithmus bilden. Die Kennwert-Extraktion und damit Datenreduktion führt folglich zugleich zu einer Vereinheitlichung der Vektorgröße, sodass im Falle dieser Datenreduktion über die Erzeugung von Kennwerten auch auf die zuvor beschriebene Längenveränderung einzelner Zeitreihen verzichtet werden kann. Jedenfalls ist es besonders vorteilhaft, zumindest die in Fig. 2 dargestellte zweite Vorverarbeitungsstufe V2 zur Erzeugung einer einheitlichen Vektorgröße zu realisieren. Bevorzugt schließt sich diese zweite Vorverarbeitungsstufe V2 an die beschriebene erste Vorverarbeitungsstufe V1 an. Die Erfindung umfasst aber auch Ausführungsformen, bei denen auf die in Fig. 2 dargestellte erste Vorverarbeitungsstufe V1 verzichtet wird, sodass die Vorverarbeitungsstufe V2 dann die erste oder einzige Vorverarbeitungsstufe bildet.

Grundsätzlich besteht die Möglichkeit, den Algorithmus A und die erforderlichen Methoden für die gegebenenfalls erforderliche Vorverarbeitung in eine oder mehrere Stufen in einem Speicher des Schmierstoffspenders selbst zu hinterlegen, sodass die Zustandsüberwachung autark innerhalb des Schmierstoffspenders erfolgen kann. Der Zustand lässt sich dann z.B. über geeignete Anzeigen bzw. Displays oder auch akustische Anzeigen ausgeben. Es kann optional auf den klassifizierten Zustand reagiert werden, z.B. mit einer Aktion, wie z.B. das Reduzieren oder Erhöhen von Pausenzeiten.

Alternativ können die Informationen über den Zustand auch in anderer Weise ausgegeben werden, z.B. über eine Kommunikationseinrichtung, welche die ermittelten Zustände drahtlos oder drahtgebunden an einen Rechner, ein Smartphone, ein Tablett oder gleichen übermittelt. Auch wenn der Schmierstoffspender folglich die jeweiligen Zustände autark mit einem in dem Schmierstoffspender hinterlegten Algorithmus bestimmen kann, kann grundsätzlich die Möglichkeit einer Fernabfrage vorgesehen sein.

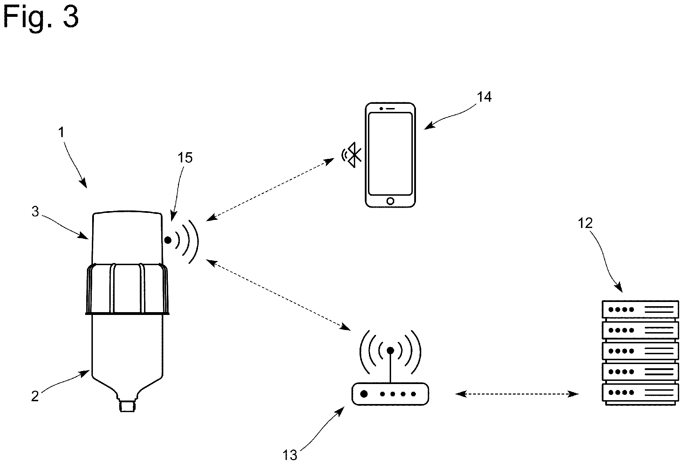

In einer bevorzugten Ausführungsform, die in Fig. 3 dargestellt ist, wird die Zustandsüberwachung bzw. die Klassifizierung an einen externen Rechner, z.B. einen Cloud-Server 12 ausgelagert. Indem in Fig. 3 dargestellten Rechner bzw. Cloud-Server 12 sind folglich die erforderlichen Methoden für die Datenverarbeitung und Klassifizierung hinterlegt. Die Messdaten werden innerhalb des Schmierstoffspenders 1 aufgenommen und über geeignete Schnittstellen 15 (z.B. per WLAN) an den Cloud-Server übermittelt, z.B. über ein in Fig. 3 ebenfalls dargestelltes Gateway 13. Der Server führt die notwendigen Rechenschritte, z.B. die Vorverarbeitung, und schließlich die Zustandsklassifizierung durch. Anschließend wird der ermittelte Zustand wieder an das Schmiersystem übertragen, sodass innerhalb des Schmiersystems eine Reaktion erfolgen kann oder der Zustand an dem Schmierstoffspender angezeigt werden kann oder auch von einem weiteren Gerät 14 abgefragt werden kann. Dazu ist in Fig. 3 z.B. auch die Abfrage des Zustandes über ein Smartphone 14, z.B. über eine Bluetooth-Schnittstelle 16 dargestellt.

## Patentansprüche

1. Verfahren zur Bestimmung und/oder Überwachung des Zustandes eines elektromechanisch betriebenen Schmierstoffspenders (1),
wobei der Schmierstoffspender (1) einen mit Schmierstoff gefüllten Behälter (2) und eine austauschbar an den Behälter (2) angeschlossene, elektromechanische Antriebseinheit (3) aufweist, mit welcher Schmierstoff aus dem Behälter zu einem Auslass (11) förderbar ist,
wobei die Antriebseinheit (3) oder ein oder mehrere in die Antriebseinheit (3) und/oder in den Behälter (2) integrierte Sensoren Messdaten (R) für eine oder mehrere Messgrößen zur Verfügung stellen und
wobei auf Basis der Messdaten (R) zumindest ein Zustand (Z) des Schmierstoffspenders (1) bestimmt wird,
**dadurch gekennzeichnet,**
**dass** die Messdaten (R) oder daraus erzeugte Daten als Eingabedaten (E) von einem mit Methoden des Maschinellen Lernens trainierten Algorithmus (A) verarbeitet werden, welcher auf Basis der Eingabedaten (E) einen Zustand (Z) des Schmierstoffspenders (1) klassifiziert.

2. Verfahren nach Anspruch 1, **dadurch gekennzeichnet, dass** die Messdaten (R) mit einer vorgegebenen Abtastrate als Zeitreihen mit jeweils einer Vielzahl von Messwerten für eine oder mehrere Messgrößen zur Verfügung gestellt werden und dass die Zeitreihen oder daraus erzeugte Daten als Eingabedaten (E) von dem Algorithmus (A) verarbeitet werden.

3. Verfahren nach Anspruch 2, **dadurch gekennzeichnet, dass** als Zeitreihen multivariate Zeitreihen zur Verfügung gestellt werden, die für mehrere Messgrößen jeweils eine Vielzahl von Messwerten enthalten.

4. Verfahren nach einem der Ansprüche 1 bis 3, **dadurch gekennzeichnet, dass** als Messgrößen eine, mehrere oder sämtliche der Messgrößen Temperatur, Druck, Strom, Spannung und Drehgeschwindigkeit zur Verfügung gestellt werden, z.B. mit einem oder mehreren Sensoren gemessen oder unmittelbar von dem Antrieb oder einer Steuerung zur Verfügung gestellt werden.

5. Verfahren nach einem der Ansprüche 1 bis 4, **dadurch gekennzeichnet, dass** der Algorithmus (A) zusätzlich zu den Messdaten (R) eine oder mehrere charakteristische Größen des Schmierstoffspenders, z.B. die Behältergröße und/oder die Art des Schmierstoffs, verarbeitet.

6. Verfahren nach einem der Ansprüche 1 bis 5, **dadurch gekennzeichnet, dass** der Algorithmus (A) für die Klassifizierung eines, mehrerer oder sämtlicher der Zustände
- "Normalzustand",
- "fehlender Behälter",
- "leerer Behälter",
- "Überstrom/Druckanstieg",
- "Überstrom/Blockade",
- "mechanischer Schaden"
eingerichtet und trainiert ist.

7. Verfahren nach einem der Ansprüche 1 bis 6, **dadurch gekennzeichnet, dass** der Algorithmus (A) mit Trainingsdaten trainiert ist.

8. Verfahren nach einem der Ansprüche 1 bis 7, **dadurch gekennzeichnet, dass** der Algorithmus (A) nach der Methode des überwachten Lernens ("Supervised Learning") mit Trainingsdaten und zugeordneten Zuständen trainiert ist.

9. Verfahren nach einem der Ansprüche 1 bis 8, **dadurch gekennzeichnet, dass** der Algorithmus (A) vom Typ "Random Forest Klassifikator" oder "Support Vector Machine" oder "Naive Bayes Klassifikator" oder "k-Nearest Neighbor Klassifikator" oder "Long Short Term Memory (LSTM)" ist.

10. Verfahren nach einem der Ansprüche 1 bis 9, **dadurch gekennzeichnet, dass** die als Rohdaten (R) aufgenommenen Messdaten vor der Analyse durch den Algorithmus (A) zunächst in zumindest einer Vorverarbeitungsstufe (V1, V2) vorverarbeitet werden.

11. Verfahren nach Anspruch 10, **dadurch gekennzeichnet, dass** die Messdaten bzw. Rohdaten (R) z.B. die als Zeitreihen aufgenommenen Rohdaten (R), in einer Vorverarbeitungsstufe, z.B. einer ersten Vorverarbeitungsstufe (V1) skaliert, normalisiert, transformiert und/oder gefiltert werden.

12. Verfahren nach Anspruch 11, **dadurch gekennzeichnet, dass** die Rohdaten oder die optional in einer ersten Vorverarbeitungsstufe vorbereiteten Daten in einer (z.B. zweiten) Vorverarbeitungsstufe (V2) auf eine einheitliche Vektorgröße für einen Eingabevektor des Algorithmus (A) normiert werden.

13. Verfahren nach Anspruch 12, **dadurch gekennzeichnet, dass** die Rohdaten oder die vorverarbeiteten Daten durch eine Längenveränderung, z.B. Erweiterung oder Reduktion, einer oder mehrerer Zeitreihen auf eine einheitliche Vektorgröße normiert werden.

14. Verfahren nach Anspruch 12, **dadurch gekennzeichnet, dass** die Rohdaten oder die bearbeiteten Daten durch eine Kennwert-Extraktion auf eine einheitliche Vektorgröße normiert werden, wobei im Rahmen der Kennwert-Exraktion vorzugsweise aus den Messdaten, z.B. den Zeitreihen jeweils mehrere statistische Kennwerte berechnet werden, welche die Messdaten bzw. die jeweilige Zeitreihe charakterisieren und einen einheitlichen Eingabevektor für den Algorithmus bilden.

15. Verfahren nach Anspruch 14, **dadurch gekennzeichnet, dass** als statistische Kennwerte einer, mehrere oder sämtliche der folgenden Kennwerte der Messdaten, z.B. einer Zeitreihe, bestimmt werden:
- Summe der Messwerte,
- Median,
- Mittelwert,
- Länge,
- Standardabweichung,
- Varianz,
- quadratisches Mittel (RMS),
- Maximum,
- Minimum.

16. Schmierstoffspender (1) mit einem mit Schmierstoff gefüllten Behälter (2) und einer austauschbar an den Behälter (2) angeschlossenen elektromechanischen Antriebseinheit (3), eingerichtet zur Durchführung des Verfahrens nach einem der Ansprüche 1 bis 15.

17. Schmierstoffspender (1) nach Anspruch 16, **dadurch gekennzeichnet, dass** in die Antriebseinheit (3), z.B. in deren Steuereinheit (6), ein Speicher integriert ist, in welchem der (trainierte) Algorithmus (A) gespeichert ist.

18. Schmierstoffspender (1) nach Anspruch 16 oder 17, **dadurch gekennzeichnet, dass** die Antriebseinheit (6) mit einer Kommunikationseinrichtung (15) für eine drahtlose oder drahtgebundene Kommunikation des Schmierstoffspenders (1) mit einem externen Rechner 12 ausgerüstet ist, wobei der (trainierte) Algorithmus (A) in einem Speicher des externen Rechners (12) gespeichert ist.

19. Verfahren zum Anlernen eines Schmierstoffspenders (1) nach einem der Ansprüche 15 bis 18, **dadurch gekennzeichnet, dass** Trainingsdaten zur Verfügung gestellt werden und dass der Algorithmus (A) mit diesen Trainingsdaten trainiert wird.

20. Verfahren nach Anspruch 19, **dadurch gekennzeichnet, dass** sowohl Trainingsdaten als auch den Trainingsdaten zugeordnete, klassifizierte Zustände zur Verfügung gestellt werden und dass der Algorithmus (A) mit diesen Trainingsdaten und den zugeordneten Zuständen mit der Methode des überwachten Lernens trainiert wird.
